# EUROPEAN PATENT APPLICATION

(11) **EP 1 932 637 A2**
(43) Date of publication of application: **18.06.2008**
(21) Application number: 07122716.9
(22) Date of filing: 10.12.2007
(51) Int. Cl.: B27D 5/00, E04C 2/36, B29C 63/00

(54) **Edgebanding method and apparatus and a panel**

(30) Priority: 11.12.2006 IT MO20060402
(71) Applicant: SCM GROUP S.p.A., 47900 Rimini (IT)
(72) Inventor: Neri, Alessandro, 47900, Rimini (RN) (IT)
(74) Representative: Crugnola, Pietro

(57) **Abstract**

Method for edgebanding panels (1) made of wood or similar materials comprising milling an edge portion (6) of said panels (1) to obtain seat means (7), inserting into said seat means (7) a supporting element (8) and fixing on said supporting element (8) an edge element (28), wherein said fixing is provided before said inserting; an edgebanding apparatus for fixing an edge element (28) to an edge portion (6) of a panel (1) made of wood or similar materials comprising fixing means (37,38) for fixing on said edge element (28) a supporting element (8) arranged for supporting said edge element (28); a panel made of wood or similar materials provided with an intermediate layer (3) interposed between a first layer (4) and a second layer (5), and with an edge portion (6), in which there is obtained seat (7) having a substantially trapezoidal cross section and comprising a bottom wall (12), wherein said bottom wall (12) consists of an end wall (45) of said intermediate layer (3) and a supporting element for supporting an edge element (28) of a panel (1) made of wood or similar materials, wherein said edge element comprises notch means (22).

## Description

The invention relates to methods for edgebanding panels, in particular composite panels, an edgebanding apparatus and a panel so obtained.

The invention further relates to a supporting element usable in the aforesaid panels for supporting an edge element.

Composite panels are known, for example used for making furniture, shelving, shelves, doors and the like, provided with a layered or "sandwich" structure.

This structure comprises an intermediate layer interposed between a first external layer and a second external layer, that are substantially flat and mutually opposite, and are made of wood or similar materials.

The intermediate layer is made of a filling material, made of wood or similar materials, such as, for example, sheets of cardboard having a honeycomb structure that is lighter and less resistant than the material used for making the first and the second external layer.

These panels are further provided, at the edge portions thereof, with a longitudinal groove, for example -having a trapezoidal or rectangular-shaped cross section, obtained by suitably milling the edge portions, in particular by milling the intermediate layer, the first external layer and the second external layer.

This groove extends from the intermediate layer up to the first and the second external layer, on the internal sides of which notches are formed that are opposite one another.

Such notches are arranged, in use, to act as stop seats for a supporting element, or list, arranged for being received in the aforesaid groove.

The supporting element, made of wood or similar materials, has a cross section with the same shape as that of the groove and is arranged for reinforcing and strengthening the edge portions of the panel and for supporting an edge element.

The supporting element may have a thickness that is more or less thick depending on whether in external surfaces of the first external layer and/or of the second external layer, at a certain distance from the aforesaid edge portions, holes and/or millings have to be made.

This occurs, for example, for panels arranged for acting as a supporting frame of a piece of furniture or for panels having the function of doors.

In such a case, in fact, pins can engage the holes, which pins project from the aforesaid external surfaces and are arranged for supporting for example a shelf, or fixing means, for example screws, arranged for fixing to such panels elements such as hinges.

On the other hand, such millings may act as a guide for further panels, for example panels with a thin thickness arranged for acting as a bottom wall for a piece of furniture.

A drawback of the supporting elements with a great thickness is that they may be used only for panels having a rectilinear and not a curvilinear profile, inasmuch as owing to the great thickness they could easily break.

The aforesaid edge element is made of plastics or similar materials.

The edge element, in use, is supported and abuts on an abutting surface of the panel defined by a first face of the supporting element, opposite a second face of the supporting element facing a bottom wall of the aforesaid groove, and is supported by respective head surfaces of the first and of the second external layer, the first face and the head surfaces facing the edge element.

For edgebanding the composite panels defined above, a method is known comprising above all cutting to size, by a first milling apparatus, a panel, which has been suitably assembled previously.

Subsequently, the edge portions of the panel are milled by means of a second milling apparatus to obtain the aforesaid groove, after which is provided to insert and glue the supporting element in the groove by a first edgebanding apparatus.

This first edgebanding apparatus comprises a first glue distributing element arranged for distributing a first layer of glue on respective side surfaces of the aforesaid supporting element and a first pressing roller that presses and inserts the supporting element into the groove.

Still subsequently, grinding the abutting surface by a grinding apparatus is provided after which gluing the edge element to the abutting surface by a second edgebanding apparatus is provided.

This second edgebanding apparatus comprises a second glue distributing element arranged for distributing a second layer of glue on an active surface of the edge element facing the aforesaid abutting surface, and a second pressing roller that presses the edge element on the abutting surface.

Still subsequently, there is provided removing an upper part and a lower part of the edge element that exceed the abutting surface by means of a trimming apparatus, making, by means of an edging apparatus, a radius between the edge element applied to the abutting surface of the panel and the respective external surfaces of the first and of the second external layer, and finally rounding, by means of a rounding/profiling apparatus, the profile of the edge element after this edge element has been applied to the panel.

A drawback of this method is that it is extremely slow and laborious to actuate, which entails low productivity and consequent loss of money.

This is essentially due to the considerable number of operations to be actuated.

A further drawback of this method is that it requires at least two edgebanding apparatuses to be made, in addition to a grinding apparatus, which increases the expenses to be sustained that are connected therewith, such as the purchase and maintenance costs thereof.

Further, in particular in the case of machinings on panels executed online, this implies the need to have a sufficiently large environment available for receiving the apparatuses required to apply the aforesaid method.

An object of the invention is to improve the methods for edgebanding panels made of wood or similar materials.

A further object is to provide a method for edgebanding panels that is faster and simpler to actuate than are known methods.

Another object is to improve edgebanding apparatuses arranged for edgebanding panels made of wood or similar materials.

A another further object is to improve panels, in particular composite panels.

Still another object is to improve supporting elements arranged for supporting the edge elements.

A still other object is to provide supporting elements, in particular supporting elements with great thickness, that are usable in panels having a curvilinear profile.

In a first aspect of the invention, there is provided a method for edgebanding panels made of wood or similar materials comprising milling an edge portion of said panels to obtain seat means, inserting into said seat means a supporting element and fixing on said supporting element an edge element, characterised in that before said inserting there is provided said fixing.

Owing to this aspect of the invention, it is possible to obtain a method for edgebanding panels that is particularly easy and fast to apply.

In fact, in this method said supporting element is fixed on said edge element before being inserted into said seat means.

In this way, the slow and laborious grinding operation is eliminated that made the known methods particularly slow and laborious.

Further, this enables a grinding apparatus used in the known methods to be eliminated, with consequent reduction of costs and of total overall dimensions.

In a second aspect of the invention, there is provided a method for obtaining seat means in edge portions of a panel made of wood or similar materials provided with an intermediate layer interposed between a first layer and a second layer, comprising milling said first layer, said second layer and said intermediate layer, such that a bottom wall of said seat means consists of an end wall of said intermediate layer.

Owing to the second aspect of the invention, it is possible to obtain an alternative method for edgebanding panels with respect to known methods.

In a third aspect of the invention, there is provided an edgebanding apparatus for fixing an edge element to an edge portion of a panel made of wood or similar materials comprising fixing means for fixing on said edge element a supporting element arranged for supporting said edge element.

Owing to the third aspect of the invention, it is possible to obtain an edgebanding apparatus that both enables said edge element to be fixed to said supporting element and said edge element and said supporting element to be fixed to said edge portion.

This further enables only one edgebanding apparatus to be used with respect to the two edgebanding apparatuses used in the prior art method, with consequent reduction of the overall dimensions and containment of costs.

In a fourth aspect of the invention, there is provided a supporting element for supporting an edge element of a panel made of wood or similar materials, characterised in that it comprises notch means.

Owing to this aspect of the invention, it is possible to obtain supporting elements, also of great thickness, that are particularly flexible.

This enables these supporting elements to be used even in panels having a curvilinear profile.

In a fifth aspect of the invention, there is provided a panel made of wood or similar materials, provided with an intermediate layer interposed between a first layer and a second layer, and with an edge portion, in which there is obtained a seat having a substantially trapezoidal cross section and comprising a bottom wall, characterised in that said bottom wall consists of an end wall of said intermediate layer.

Owing to the fifth aspect of the invention, it is possible to obtain a panel having constructional features that are different from those of known panels.

The invention can be better understood and implemented with reference to the attached drawings that illustrate some embodiments thereof by way of non-limitative embodiments, in which:
Figures 1 to 4 show the steps of a method for edgebanding a panel;
Figure 5 is an exploded view of Figure 4;
Figure 6 is a side view of a supporting element included in the panel in Figure 5;
Figure 7 is a schematic top view of an edgebanding apparatus arranged for edgebanding panels;
Figure 8 is a perspective view of the edgebanding apparatus in Figure 7;
Figure 9 is a schematic and fragmentary top view of the panel in Figure 4;
Figure 10 is a detail in Figure 9;
Figure 11 is a further detail in Figure 9.

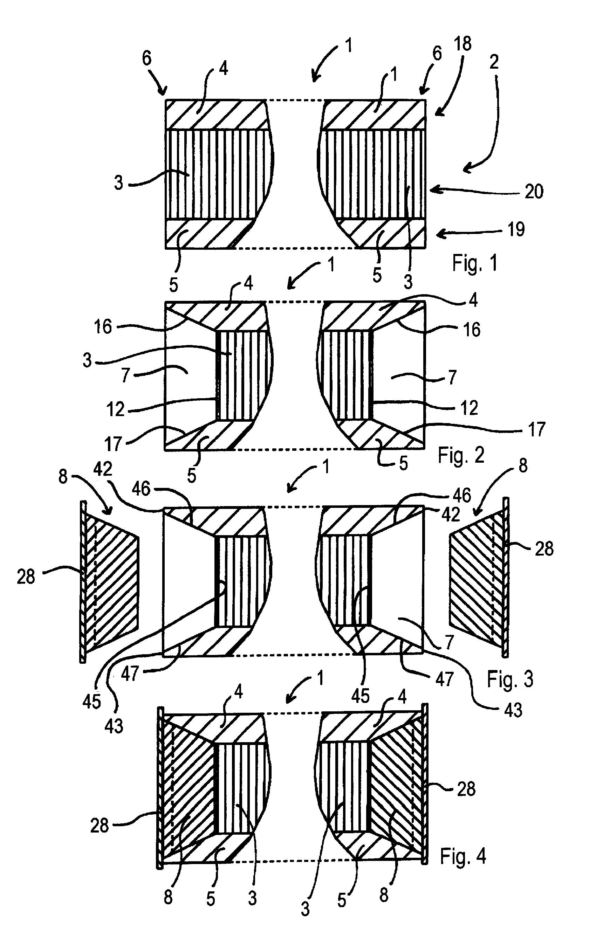

With reference to Figures 1 to 5, there is shown a panel 1, usable for making furniture, shelving, shelves, doors and the like, comprising a layered or "sandwich" structure 2.

The structure 2 comprises an intermediate layer 3 interposed between a first external layer 4 and a second external layer 5 that are substantially flat and mutually opposite, made of wood or similar materials.

The intermediate layer 3 is made of a filling material, made of wood or similar materials, such as, for example, sheets of cardboard having a honeycomb structure, which is lighter and less resistant than the material used to make the first layer 4 and the second layer 5.

The panel 1 is further provided, at edge portions 6 thereof, with a seat 7, extending substantially longitudinally (Figure 2).

The seat 7 has a substantially trapezoidal cross section, and is obtained, as disclosed better below, by suitably milling the edge portions 6.

The seat 7 comprises a bottom wall 12, a first side wall 16 and a second side wall 17.

The first side wall 16 and the second side wall 17 are obtained by respectively milling a first end portion 18 and a second end portion 19 respectively of the first layer 4 and of the second layer 5, whilst the bottom wall 12 is obtained by milling a third end portion 20 of the intermediate layer 3 (Figure 1).

In this way, the bottom wall 12, the first side wall 16 and the second side wall 17 consist respectively of an end wall 44 of the intermediate layer 3, of a first tilted wall 45 of the first layer 4 and of a second tilted wall 46 of the second layer 5.

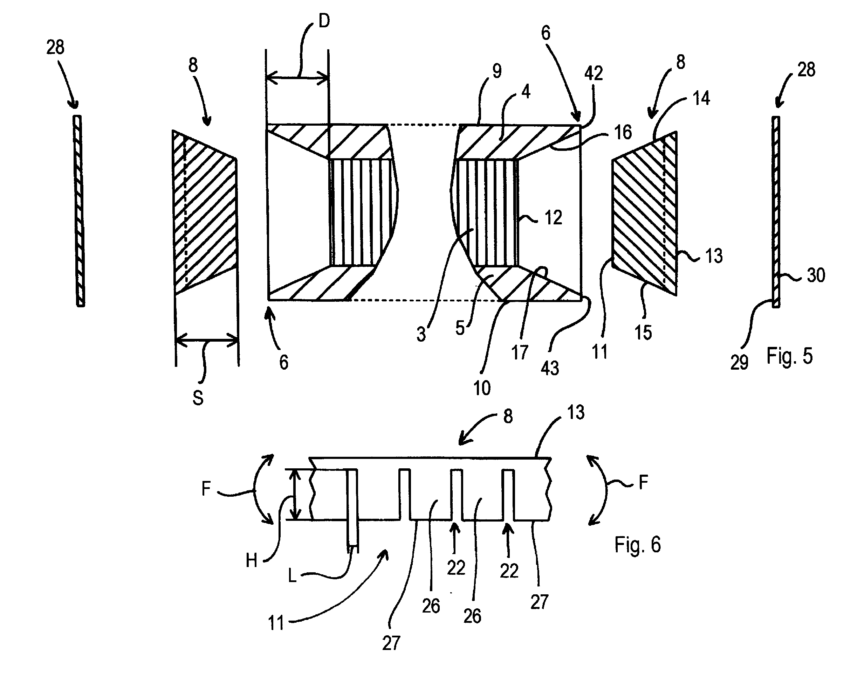

The seat 7 is arranged, in use, for receiving a supporting element 8, in the form of a slat or strip, made of wood or similar materials, having a cross section with a shape that is substantially the same as that of the seat 7 and arranged for reinforcing and strengthening the edge portions 6 of the panel 1 (Figure 5) for supporting an edge element 28.

The supporting element 8 comprises a side 11 facing, and arranged for contacting, in use, the bottom wall 12, a further side 13 opposite the side 11, a first side surface 14 and a second side surface 15, which are mutually opposite, facing, in use, respectively the first side wall 16 and the second side wall 17 of the seat 7.

Between the first side surface 14 and the second side surface 15 and respectively the first side wall 16 and the second side wall 17 there are defined, in use, respective gaps, which are not shown, arranged for receiving an adhesive substance, arranged for gluing the supporting element 8 to the seat 7.

In other words, between the supporting element 8 and the seat 7 a certain clearance is present.

The supporting element 8 further has a thickness S that is more or less great according to whether in a first external surface 9 and/or a second external surface 10 respectively of the first layer 4 and of the second layer 5, within a certain distance D from the edge portions 6, holes and/or millings that are not shown have to be executed.

This occurs, for example, for a panel 1 arranged for acting as a supporting frame of a piece of furniture or for a panel 1 acting as a door.

In this case, in fact, pins can engage these holes, which pins are not shown, which pins project from the first external surface 9 and/or from the second external surface 10 and are arranged for supporting, for example, a shelf, or fixing means, which are not shown, which are arranged for fixing to the panel 1 elements such as hinges.

On the other hand, these millings are made to act as a guide for further panels, which are not shown, for example panels with a thin thickness arranged for acting as a bottom wall for a piece of furniture.

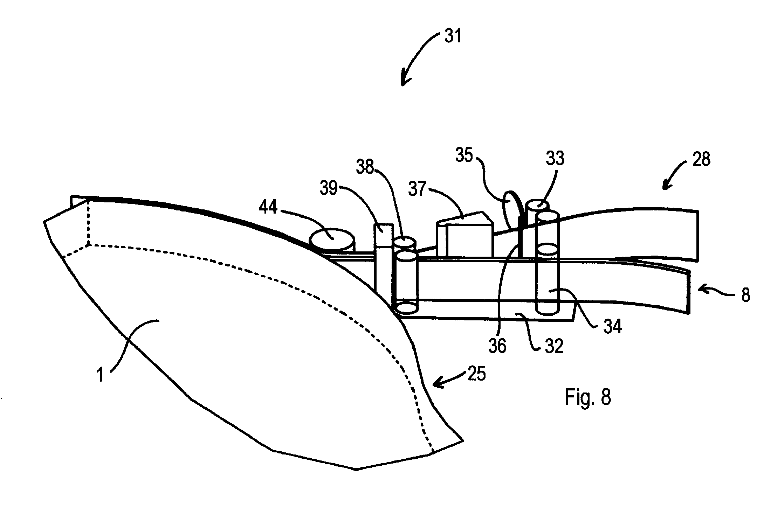

The supporting element 8 further comprises a plurality of notches 22, for example mutually equidistant, obtained in the side 11, for example having a parallelepipedon shape, and defining a plurality of elongated elements 26, which comprise respective ends 27 that may move towards or away from one another in function of a curvature radius of a profile portion 25 of the panel 1 contacted by the supporting element 8 (Figures 6 and 8).

In particular, the notches 22 have a width L and a height H defining a minimum curvature radius for the supporting element 8.

Owing to the notches 22, it is possible to make the supporting element 8 more flexible, which supporting element 8 can bend in the direction indicated by the arrows F, to adapt to the profile 25, in particular if this profile 25 has a great thickness S.

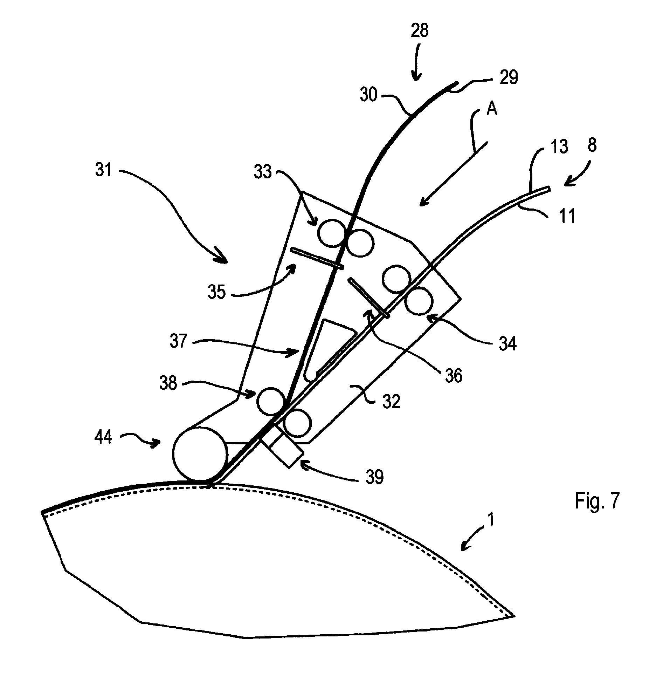

It should be noted that this enables the supporting element 8 to be associated with a panel 1 having a curvilinear profile 25 (Figure 7).

In an embodiment of the invention, which is not shown, the supporting element 8 is devoid of the notches 22.

Lastly, the edge element 28, which is made of plastics or similar materials, comprises a first face 29 facing and arranged for contacting the further side 13 of the supporting element 8 and a second face 30 opposite the first face 29.

With reference to Figures 7 and 8, there is shown an edgebanding apparatus 31 arranged for fixing the supporting element 8 on the edge element 28 and subsequently fixing the supporting element 8 and the edge element 28 on the panel 1. The edgebanding apparatus 31 comprises a support 32 on which a first pair of rollers 33 and a second pair of rollers 34 are mounted.

The first pair of rollers 33 and the second pair of rollers 34 are arranged for unwinding from respective reels, which are not shown, respectively the edge element 28 and the supporting element 8.

In particular, the first pair of rollers 33 contacts the first face 29 and the second face 30 of the edge element 28, whilst the second pair of rollers 34 contacts the side 11 and the further side 13 of the supporting element 8.

The edgebanding apparatus 31 comprises further a first blade 35 and a second blade 36, arranged respectively for cutting to a desired length the edge element 28 and the supporting element 8.

In particular, the first blade 35 and the second blade 36, suitably controlled by a control and management system that is not shown, enable the edge element 28 and the supporting element 8 to be cut to different lengths.

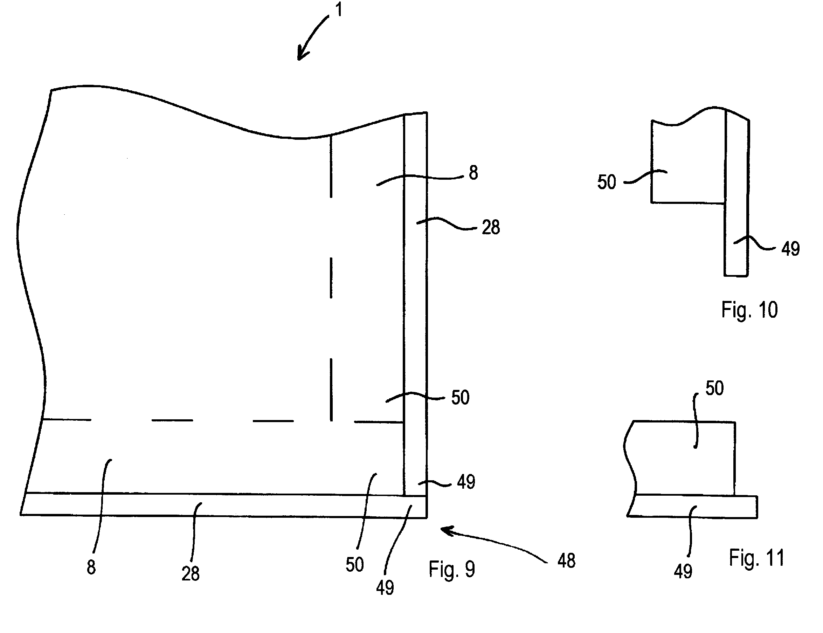

This is particularly advantageous for edgebanding an edge zone 48 of the panel 1 (Figures 9 to 11).

In this edge zone 48, in fact, respective end parts 49, 50 of the edge element 28 and of the supporting element 8 have lengths that are different from one another each time, in function of the position thereof on the panel 1.

The first blade 35 and the second blade 36 are positioned respectively upstream of the first pair of rollers 34 and of the second pair of rollers 35 with respect to an advancing direction A of the edge element 28 and of the supporting element 8.

The edgebanding apparatus 31 further comprises a glue distributor 37, for example comprising a gluing roller, which is not shown, arranged for distributing a desired quantity of glue on the further side 13 of the supporting element 8.

The glue distributor 37 is positioned downstream of the first blade 35 and of the second blade 36 with respect to the advancing direction A.

The edgebanding apparatus 31 further comprises a pair of pressing rollers 38 positioned downstream of the glue distributor 37 with respect to the advancing direction A.

The pressing rollers 38 act respectively on the second face 30 and on the side 11 and are arranged for pressing the edge element 28 against the supporting element 8, so as to fix the edge element 28 on the supporting element 8.

The edgebanding apparatus 31 further comprises glue distributing means 39 positioned downstream of the pressing rollers 38 with respect to the advancing direction A.

The glue distributing means 39, for example comprising a pair of glue injectors, is arranged for distributing a desired quantity of glue on the first side surface 14 and on the second side surface 15 of the supporting element 8, and on a first active portion 40 and on a second active portion 41 (Figure 3) of the first face 29 of the edge element 28, the first active portion 40 and the second active portion 41 exceeding in height and facing the further side 13 of the supporting element 8.

In particular, the first active portion 40 and the second active portion 41 are arranged for being fixed respectively to a first head surface 42 and to a second head surface 43 respectively of the first layer 4 and of the second layer 5. The edgebanding apparatus 31 further comprises a further pressing roller 44 positioned downstream of the glue distributing means 39 with, respect to the advancing direction A.

The further pressing roller 44 is arranged for contacting the second face 30 of the edge element 28 and for fixing the edge element 28, supported by the supporting element 8, to the panel 1.

In other words, the further pressing roller 44 inserts the supporting element 8 into the seat 7 and presses the first active portion 40 and the second active portion 41 respectively against the first head surface 42 and the second head surface 43, which act as an abutment.

In an embodiment of the invention, which is not shown, instead of the glue distributor 37 there is provided an activating element, for example a hair dryer or a lamp, arranged for activating a glue located on the further side 13.

In a further embodiment of the invention, which is not shown, the glue distributor 37, or the activating element, distribute, or activate, a glue on the first face 29 of the edge element 28.

Below, with reference to Figures 1 to 4, there is described a method for edgebanding a panel 1 of the type disclosed above.

This method first of all comprises cutting to size a panel 1, which has been suitably assembled previously.

Subsequently, there is provided milling by means of a suitable shaped milling tool of the edge portions 6 to obtain the seat 7, in particular milling the first layer 4, the second layer 5 and the intermediate layer 3.

This milling enables the first head surface 42 and first tilted wall 46 to be defined in the first layer 4, and the second head surface 43 and the second tilted wall 47 to be defined in the second layer 5, and the end wall 45 to be defined in the intermediate layer 3.

Still subsequently, the edgebanding apparatus 31 glues the supporting element 8 to the edge element 28 and subsequently fixes the thus assembled supporting element 8 and edge element 28 to the panel 1.

This fixing comprises inserting the supporting element 8 into the seat 7 and pressing the first active portion 40 and the second active portion 41 respectively against the first head surface 42 and the second head surface 43.

Still subsequently, the usual and known finishing operations are performed on the edge element 28.

It should be noted how the edgebanding method disclosed above is particularly easy and fast to apply.

In fact, in this method the supporting element 8 is fixed onto the edge element 28 before being inserted into the seat 7

In this way, the slow and laborious grinding operation is eliminated that made the known methods particularly slow and laborious.

Further, this enables a grinding unit used in known methods to be eliminated, with a consequent reduction in costs and overall dimensions.

## Claims

1. Method for edgebanding panels (1) made of wood or similar materials comprising milling an edge portion (6) of said panels (1) to obtain seat means (7), inserting into said seat means (7) a supporting element (8) and fixing on said supporting element (8) an edge element (28), **characterised in that** before said inserting there is provided said fixing.

2. Method according to claim 1, wherein said fixing comprises gluing said supporting element (8) onto said edge element (28).

3. Method according to claim 2, wherein said gluing comprises applying an adhesive substance to said supporting element (8) and/or to said edge element (28) .

4. Method according to claim 2, wherein said gluing comprises activating a further adhesive substance located on said supporting element (8) and/or on said edge element (28).

5. Method according to any one of claims 2 to 4, wherein said gluing comprises pressing said supporting element (8) against said edge element (28).

6. Method according to any preceding claim, wherein said inserting comprises still gluing said supporting element (8) in said seat means (7).

7. Method according to any preceding claim, wherein said inserting comprises still pressing said edge element (28) against head surfaces (42, 43) of said panel (1).

8. Method according to claim 7, wherein said still pressing comprises further gluing said edge element (28) onto said head surfaces (42, 43).

9. Method according to any preceding claim, wherein said panel is a multilayered panel (1).

10. Method according to claim 9, wherein said multilayered panel comprises an intermediate layer (3) interposed between a first layer (4) and a second layer (5), said intermediate layer (3) being made of a lighter material than a further material used for making said first layer (4) and said second layer (5).

11. Method according to claim 10, wherein said milling said edge portion (6) comprises milling said first layer (4), said second layer (5) and said intermediate layer (3) so that a bottom wall (12) of said seat means (7) consists of an end wall (45) of said intermediate layer (3).

12. Method according to any preceding claim, wherein said seat means (7) has a substantially trapezoidal cross section.

13. Method according to any one of claims 10 to 12, as claim 12 is appended to claim 10, wherein said seat means (7) comprises side walls (16, 17) consisting of respective tilted internal walls (46, 47) of said first layer (4) and of said second layer (5).

14. Method for obtaining seat means (7) in edge portions (6) of a panel (1) made of wood or similar materials provided with an intermediate layer (3) interposed between a first layer (4) and a second layer (5), comprising milling said first layer (4), said second layer (5) and said intermediate layer (3) so that a bottom wall (12) of said seat means (7) consists of an end wall (45) of said intermediate layer (3).

15. Method according to claim 13, wherein said seat means (7) has a substantially trapezoidal cross section.

16. Method according to claim 13, or 14, wherein said seat means (7) comprises side walls (16, 17) consisting of respective tilted internal walls (46, 47) of said first layer (4) and of said second layer (5).

17. Edgebanding apparatus for fixing an edge element (28) to an edge portion (6) of a panel (1) made of wood or similar materials comprising fixing means (37, 38) for fixing on said edge element (28) a supporting element (8) arranged for supporting said edge element (28).

18. Apparatus according to claim 17, wherein said fixing means (37, 38) comprises gluing means (37) arranged for distributing or activating an adhesive substance on said edge element (28) and/or on said supporting element (8).

19. Apparatus according to claim 19, wherein said gluing means (37) comprises a gluing roller.

20. Apparatus according to claim 19, wherein said gluing means (37) comprises an activating element for activating said adhesive substance.

21. Apparatus according to any one of claims 17 to 20, wherein said fixing means (37, 38) comprises pressing means (38) arranged for pressing said edge element (28) against said supporting element (8).

22. Apparatus according to claim 21 as appended to claim 18, wherein said pressing means (38) is positioned downstream of said gluing means (37) with respect to an advancing direction (A) of said edge element (28) and of said supporting element (8) towards said panel (1).

23. Apparatus according to claim 21, or 22, wherein said pressing means comprises a pair of pressing rollers (38).

24. Apparatus according to any one of claims 17 to 23, and comprising further gluing means (39) arranged for distributing or activating a further adhesive substance on side walls (14, 15) of said supporting element (8) and/or on end portions (40, 41) of said edge element (28).

25. Apparatus according to claim 24 as appended to claim 21, wherein said further gluing means (39) is positioned downstream of said pressing means (38) with respect to said advancing direction (A).

26. Apparatus according to claim 24, or 25, and comprising further pressing means (44) arranged for pressing said end portions (40, 41) against head portions (42, 43) of said panel (1) and for inserting said supporting element (8) into said seat means (7).

27. Apparatus according to claim 26, wherein said further pressing means (44) is positioned downstream of said further gluing means (39) with respect to said advancing direction (A).

28. Apparatus according to claim 26, or 27, wherein said pressing means comprises a further pressing roller (44).

29. Apparatus according to any one of claims 17 to 28, and comprising cutting means (35, 36) arranged for cutting to desired lengths said supporting element (8) and said edge element (28).

30. Apparatus according to claim 29 as appended to claim 18, wherein said cutting means (35, 36) is positioned upstream of said gluing means (37) with respect to said advancing direction (A).

31. Apparatus according to any one of claims 17 to 30, and comprising moving means (33, 34) arranged for moving said edge element (28) and said supporting element (8) along said advancing direction (A).

32. Apparatus according to claim 31 as appended to claim 29, or 30, wherein said moving means (33, 34) is positioned upstream of said cutting means (35, 36) with respect to said advancing direction (A).

33. Apparatus according to claim 31, or 32, wherein said moving means comprises first rollers (33) and second rollers (34) arranged respectively for moving said edge element (28) and said supporting element (8).

34. Panel made of wood or similar materials provided with an intermediate layer (3) interposed between a first layer (4) and a second layer (5), and with an edge portion (6), in which there is obtained a seat (7) having a substantially trapezoidal cross section and comprising a bottom wall (12), **characterised in that** said bottom wall (12) consists of an end wall (45) of said intermediate layer (3).

35. Panel according to claim 34, wherein said seat (7) comprises a first side wall (16) and a second side wall (17) consisting respectively of a first tilted internal wall (46) of said first layer (4) and of a second tilted internal wall (47) of said second layer (5).

36. Panel according to claim 34, or 35, and comprising a supporting element (8) arranged for being received at least partially in said seat (7) and for supporting an edge element (28) of said panel (1).

37. Panel according to claim 36, wherein said supporting element (8) comprises notch means (22).

38. Panel according to claim 37, wherein said notch means (22) is obtained in a side (11) of said supporting element (8) facing said bottom wall (12).

39. Panel according to claim 37, or 38, wherein said notch means comprises a plurality of notches (22) which are mutually equidistant.

40. Panel according to claim 39, wherein said notches (22) have a substantially parallelepipedon shape.

41. Panel according to claim 39, or 40, wherein said notches (22) have a width (L) and a height (H) defining a minimum curvature radius for said supporting element (8).

42. Panel according to any one of claims 39 to 41, wherein said notches (22) define in said side (11) a plurality of elongated elements (26).

43. Panel according to claim 42, wherein said elongated elements (26) comprise respective ends (27) arranged for contacting said bottom wall (12).

44. Supporting element for supporting an edge element (28) of a panel (1) made of wood or similar materials, **characterised in that** it comprises notch means (22).

45. Element according to claim 44, wherein said notch means (22) is obtained in a side (11) of said element (8) opposite a further side (13) of said element (8) facing said edge element (28).

46. Element according to claim 45, wherein said notch means comprises a plurality of notches (22) which are mutually equidistant.

47. Element according to claim 46, wherein said notches (22) have a substantially parallelepipedon shape.

48. Element according to claim 46, or 47, wherein said notches (22) have a width (L) and a height (H) defining a minimum curvature radius for said supporting element (8).

49. Element according to any one of claims 46 to 48, wherein said notches (22) define in said side (11) a plurality of elongated elements (26).

50. Element according to claim 49, wherein said elongated elements (26) comprise respective ends (27) arranged for contacting a bottom wall (12) of seat means (7) obtained in edge portions (6) of said panel (1).

51. Use of a supporting element (8) as claimed in any one of claims 44 to 50 in an edge portion (6) of a multilayered panel (1) made of wood or similar materials.
